# EUROPÄISCHE PATENTSCHRIFT

(11) **EP 3 180 401 B1**
(45) Veröffentlichungstag und Bekanntmachung des Hinweises auf die Patenterteilung: **06.06.2018**
(21) Anmeldenummer: 15744505.7
(22) Anmeldetag: 13.07.2015
(51) Int. Cl.: C09D 5/00

(54) **VOC-ARME AMINE ALS OBERFLÄCHENAKTIVER BESTANDTEIL IN DISPERSIONEN**
LOW-VOC AMINES AS A SURFACE-ACTIVE COMPONENT IN DISPERSIONS
AMINE PAUVRE EN COV UTILISÉ COMME COMPOSÉ TENSIOACTIF DANS DES DISPERSIONS

(30) Priorität: 13.08.2014 DE 102014012020
(43) Veröffentlichungstag der Anmeldung: 21.06.2017
(73) Patentinhaber: Clariant International Ltd, 4132 Muttenz (CH)
(72) Erfinder: KUPFER, Rainer, 65795 Hattersheim (DE); SÖFFING, Christoph, 65933 Frankfurt (DE)
(74) Vertreter: Mikulecky, Klaus
(86) Internationale Anmeldenummer: PCT/EP2015/065931
(87) Internationale Veröffentlichungsnummer: WO 2016/023693

(56) Entgegenhaltungen:
- WO-A1-99/19083
- WO-A2-2005/016976

## Beschreibung

Gegenstand der vorliegenden Erfindung sind VOC arme, geruchsfreie Amine aus nachwachsenden Rohstoffen als Neutralisations- und Stabilisierungsmittel für wässrige Dispersionen.

Nach dem Stand der Technik werden in wässrigen Dispersionsfarben typischerweise ammoniakalische Lösungen oder Amine wie 2-Amino-2-methyl-1-propanol als Alkalien verwendet. Solche Verbindungen stechen jedoch durch ihren amin-typischen Geruch und ihren VOC-Gehalt hervor. Da solche flüchtige organische Verbindungen zusammen mit UV-Strahlung und NOₓ die Ozonbildung begünstigen, wurde in vielen Ländern Verordnungen zur Reduzierung des VOC-Gehalts (z. B. 2004/42/EG) erlassen. Über den Umweltschutz hinaus dienen diese Verordnungen dem Schutz der Bevölkerung vor gesundheitlichen Beeinträchtigungen durch Luftschadstoffe.

WO 2013/123153 beschreibt nichtionische Tenside mit einer oder mehreren Aminfunktionen, sowie einer oder mehreren Alkylketten als hydrophilen Part.

Das Neutralisationsvermögen von Trihydroxy-monoaminen bzw. Trihydroxydiaminen in wässrigen Farben wird in WO 2010/126657 bzw. US 2010/0326320 beschrieben. Ebenso werden die Eigenschaften der resultierenden Farben und Beschichtungen bzgl. Viskosität, Deckkraft, Vergilbung, Glanz, NassabriebBeständigkeit und Haftkraft beschrieben.

Carboxydiamine werden in WO2014/003969 beschrieben und sind in der Lage als VOC-armes Neutralisationsmittel in Farben, Beschichtungen und Reinigern zu fungieren. Carboxydiamine können allerdings nur durch mehrstufige Synthesen aus petrochemischen Rohstoffen erhalten werden.

EP 0614881, US 5449770 und US 2016962 beschreiben Methoden zur Herstellung von Glukaminen ausgehend von Glukose.

EP 1676831 beschreibt allgemein die Herstellung von tertiären Dialkylglukaminen wie Diethylglukamin und deren Verwendung als Tensid in wässrigen Anstrichen, ohne jedoch ein konkretes Beispiel anzuführen.

Der vorliegenden Erfindung lag die Aufgabe zugrunde, Amine aufzufinden, die aus nachwachsenden Rohstoffen hergestellt werden und mit deren Hilfe der pH-Wert reguliert werden kann, um so wässrige Dispersionsfarben herstellen zu können. Weiterhin sollten die Amine VOC-frei sein.

Überraschenderweise wurde gefunden, dass dies mit Aminen auf Basis des nachwachsenden Rohstoffes Glukose möglich ist.

Gegenstand der Erfindung ist daher eine Dispersion enthaltend
(A) mindestens einer Verbindung der Formel (I) 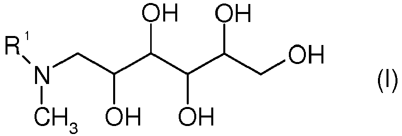 worin R¹ für H, C₁-C₄-Alkyl, CH₂CH₂OH oder CH₂CH(CH₃)OH steht,
(B) einem polymeren Binder
   und
(C) Wasser.

Die Dispersion kann darüber hinaus übliche Bestandteile von wässrigen Dispersionsfarben enthalten. Übliche Bestandteile können sein: Pigmente, wobei mit dem Begriff "Pigmente" sowohl Pigmente, als auch Füllstoffe im weiteren Sinne gemeint sind, und Hilfsstoffe. Hilfsstoffe können unter anderem Netz- und Dispergiermittel, Entschäumer, Biozide, Koaleszensmittel sowie Rheologie-Additive sein.

Verbindung (I) ist ein Polyhydroxy-Amin wobei R¹ H, C₁-C₄-Alkyl, CH₂CH₂OH oder CH₂CH(CH₃)OH sein kann. Vorzugsweise ist R¹ H, Methyl oder CH₂CH₂OH. Die Polyhydroxy-Einheit ist eine Hexose, vorzugsweise das Epimer Glukose. Das Verfahren zur Herstellung der Alkylglukamine der Formel (I) ist dem Fachmann hinlänglich bekannt. Sie erfolgt für Verbindungen mit R = C₁- bis C₄-Alkyl beispielsweise gemäß der in EP-A-1676831 angegebenen Methode durch reduktive Alkylierung von N-Alkylpolyhydroxylaminen mit Aldehyden oder Ketonen in Gegenwart von Wasserstoff und eines Übergangsmetallkatalysators. Hydroxyethyl- und Hydroxypropyl-N-Methyl-glukamin kann durch Reaktion von N-Methylglukamin mit Ethylenoxid bzw. Propylenoxid in wässriger Lösung hergestellt werden. Die Verbindungen der Formel (I) können als Reinsubstanzen oder als wässrige Lösungen eingesetzt werden. Da die tertiären Amine, wie Dimethylglukamin, Hydroxyethyl- und Hydroxypropyl-N-Methyl-glukamin wenig anfällig für die Bildung von Nitrosaminen sind, sind diese für die erfindungsgemäßen Dispersionen zu bevorzugen.

Die polymeren Binder, Komponente (B), sind Homo- oder Copolymere olefinisch ungesättigter Monomere. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure, die auch als C₉ und C₁₀-Versaticsäuren bezeichnet werden,
- Arylsubstituierte Olefine, wie Styrol und Stilben,
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Tridecyacrylat, Stearylacrylat, Hydroxyethylacrylat, Hydroxypropylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Vinylsulfonsäure, Vinylphosphonsäure, Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, Acrylamid, Methacrylamid, N-Methylacrylamid, N-Ethylacrylamid, N-Propylacrylamid, N-Methylolacrylamid sowie die entsprechenden Methacrylsäurederivate und Vinylmethylacetamid.

Zur Herstellung der erfindungsgemäßen, wässrigen Dispersionen benutztes Wasser, Komponente (C), wird vorzugsweise in Form von destilliertem oder entsalztem Wasser eingesetzt. Auch Trinkwasser (Leitungswasser) und/oder Wasser natürlichen Ursprungs kann eingesetzt werden.

Geeignete Pigmente sind feinteilige, organische oder anorganische Weiß- oder Buntpigmente oder ein Gemisch verschiedener solcher Pigmente.
Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente, insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet; auch als Füllstoffe bezeichnete Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix. Bevorzugt werden auch häufig Mischungen anorganischer Pigmente verwendet. Mischungen von organischen mit anorganischen Pigmenten werden ebenfalls häufig verwendet.

Geeignete Netz- und Dispergiermittel sind vorzugsweise Polyacrylatsalze, Acrylat- und MAS-Copolymere, Alkylphenolethoxylate und Alkylphenolethoxylat-Ersatzstoffe, wie Guerbet-Derivate, Fettsäuer- und Fettalkoholderivate, insbesondere deren Alkoxylate, sowie EO/PO-Homo- und Blockcopolymere und Polysiloxanether.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete Biozide zur Verhinderung der unkontrollierten Vermehrung von Bakterien, Algen und Pilzen sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Geeignete Koaleszensmittel sind Ester und Ketone wie Benzoate und Butyrate, sowie Etheralkohole und Glykole. Insbesondere 2,2,4-Trimethyl-pentan-1,3-diol-mono-iso-butyrat, Butylglykol, Butyldiglykol, Butyldipropylenglykol, Propylenglykolbutylether und Dipropylenglykolbutylether sind als Koaleszensmittel zu nennen.

Geeignete Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure oder pyrogene Kieselsäure.

Eine Übersicht über gängige Hilfsstoffe geben Wernfried Heilen et al. in "Additive für wässrige Lacksysteme", erschienen bei Vincentz Network, 2009.

Ein weiterer Gegenstand der Erfindung ist ein Verfahren zur Reduzierung der Phasentrennung von Dispersionen zwischen der wässrigen Phase und der festen Phase, welche dem Fachmann als Synärese geläufig ist, indem man die Verbindung der Formel (I) und gegebenenfalls Koaleszenzmittel, Entschäumer, Biozide, Rheologie-Additive sowie Netz- und/oder Dispergiermitteln in Wasser löst. Werden Pigmente benötigt, so werden diese dazu unter hoher Scherung dispergiert. Die so erhaltene Zusammensetzung wird anschließend mit einem polymeren Binder und gegebenenfalls mit weiteren Hilfsstoffen unter geringer Scherrate eingerührt. Dazu können als Dispergieraggregat Rührwerke, Dissolver, Schnellmischer oder Knetapparaturen verwendet werden, vorzugsweise einen Dissolver mit Sägezahnrührer. Die oben genannte Herstellung kann bei Temperaturen von 0 bis 100 °C, zweckmäßig bei 10 bi s 70 °C, vorzugsweise bei 20 bis 40 °C erfolgen.

Die Verbindung der Formel (I) ist vorzugsweise in einer Konzentration von 0,01 % bis 10 % vorhanden, insbesondere 0,01 % bis 5,0 %, im Speziellen 0,01 % bis 1,0 %.

Darüber hinaus kann das Verfahren auch zur Einstellung des pH-Werts genutzt werden. Dazu kann sowohl zu Beginn, als auch während des Dispergier- und Formulierungsprozesses eine hinreichende Menge der Verbindung der Formel (I) der Dispersion zugesetzt werden, so dass man einen pH-Wert zwischen 7 und 11 erhält.

Eine besondere Eigenschaft der erfindungsgemäßen Dispersion ist der VOC-freie und geruchsarme Beitrag der Verbindung der Formel (I) zur Gesamtformulierung.

Die erfindungsmäßigen Dispersionen eignen sich zur Herstellung von Beschichtungen aller Arten. Besonders eignen sich die erfindungsmäßigen Dispersionen zur Herstellung von Anstrich- und Dispersionsfarben, Dispersionslacken, Haftklebstoffen.

### Beispiele

Prozentangaben in dieser Beschreibung sind Gewichtsprozente bezogen auf das Gewicht der Gesamtzusammensetzung, sofern nichts anderes angegeben ist.

### Beispiele 1 - 5 (Vergleichsbeispiele) und Beispiele 6 - 7 in Vinylacetat-VeoVa-Acrylat Farbe:

In dieser Vergleichsreihe wurden ammoniakalische Lösung und die kommerziellen Amine Dieethanolamin (DEA), Triethanolamin (TEA), Cyclohexydiethanolamin (Genamin® CH-020, Clariant) und 2-Amino-2-methyl-1-propanol (AMP-95, Dow) mit N-Methylglukamin (NMG) und Dimethylglucamin (DMG) verglichen. Die verwendeten Farben waren wie folgt zusammengesetzt, wobei die Amine äquimolar eingesetzt wurden:

**Tabelle 1: Zusammensetzung der Vinylacetat-VeoVa-Acrylat Farben in Gew.-%**

| | Komponente | 1 (V) | 2 (V) | 3 (V) | 4 (V) | 5 (V) | 6 | 7 |
|---|---|---|---|---|---|---|---|---|
| 1 | Wasser | 29,0 | 28,9 | 28,9 | 28,8 | 29,0 | 28,8 | 28,5 |
| 2 | NH₃ (25 %ig in Wasser) | 0,1 | | | | | | |
| | DEA | | 0,2 | | | | | |
| | TEA | | | 0,2 | | | | |
| | Genamin® CH-020 | | | | 0,3 | | | |
| | AMP-95 | | | | | 0,1 | | |
| | NMG | | | | | | 0,3 | |
| | DMG (50 %ig in Wasser) | | | | | | | 0,6 |
| 3 | Calgon® N (Dispergiermittel) | 0,1 | 0,1 | 0,1 | 0,1 | 0,1 | 0,1 | 0,1 |
| 4 | Bermocoll® EHM 200 (Verdicker) | 0,5 | 0,5 | 0,5 | 0,5 | 0,5 | 0,5 | 0,5 |
| 5 | Texanol® (Koaleszenzmittel) | 0,5 | 0,5 | 0,5 | 0,5 | 0,5 | 0,5 | 0,5 |
| 6 | Dowanol® DPnB (Koaleszenzmittel) | 1,0 | 1,0 | 1,0 | 1,0 | 1,0 | 1,0 | 1,0 |
| 7 | Byk® 038 (Entschäumer) | 0,3 | 0,3 | 0,3 | 0,3 | 0,3 | 0,3 | 0,3 |
| 8 | Mowiplus® XW 330 (Netzmittel) | 0,3 | 0,3 | 0,3 | 0,3 | 0,3 | 0,3 | 0,3 |
| 9 | Nipacide® BMS (Biozid) | 0,2 | 0,2 | 0,2 | 0,2 | 0,2 | 0,2 | 0,2 |
| 10 | Finntalc® M 20 SL (Füllstoff) | 8,0 | 8,0 | 8,0 | 8,0 | 8,0 | 8,0 | 8,0 |
| 11 | Mica® TF (Füllstoff) | 8,0 | 8,0 | 8,0 | 8,0 | 8,0 | 8,0 | 8,0 |
| 12 | Omyacarb® 10 - AV (Füllstoff) | 17,0 | 17,0 | 17,0 | 17,0 | 17,0 | 17,0 | 17,0 |
| 13 | Omyacarb® extra - CL (Füllstoff) | 17,0 | 17,0 | 17,0 | 17,0 | 17,0 | 17,0 | 17,0 |
| 14 | Kronos® 2160 (Pigment) | 4,0 | 4,0 | 4,0 | 4,0 | 4,0 | 4,0 | 4,0 |
| 15 | Water | 5,4 | 5,4 | 5,4 | 5,4 | 5,4 | 5,4 | 5,4 |
| 16 | Mowilith® DM 2452, 50 % (Binder) | 8,0 | 8,0 | 8,0 | 8,0 | 8,0 | 8,0 | 8,0 |
| 17 | Tafigel® PU 40 (1:9 in Wasser) (Rheolgie Modifizierer) | 0,3 | 0,3 | 0,3 | 0,3 | 0,3 | 0,3 | 0,3 |
| 18 | Agitan® 282 (Entschäumer) | 0,3 | 0,3 | 0,3 | 0,3 | 0,3 | 0,3 | 0,3 |
| | Summe | 100 | 100 | 100 | 100 | 100 | 100 | 100 |
| | PVK | 84,3 | 84,3 | 84,3 | 84,3 | 84,3 | 84,3 | 84,3 |
| | Feststoffgehalt | 58,0 | 58,0 | 58,0 | 58,0 | 58,0 | 58,0 | 58,0 |

Die Komponenten 1 - 14 wurden bei Raumtemperatur durch sukzessive Zugabe unter hoher Scherrate mit Hilfe eines Dissolvers der Firma Getzmann mit Sägezahnrührer dispergiert. Anschließend wurden die Komponenten 15 - 18 unter geringer Scherrate untergerührt.

### Beispiele 8 - 12 (Vergleichsbeispiele) und Beispiele 13 - 14 in Styrol-Acrylat Farbe:

**Tabelle 2: Zusammensetzung der Styrol-Acrylat Farben in Gew.-%**

| | Komponente | 8 (V) | 9 (V) | 10 (V) | 11 (V) | 12 (V) | 13 | 14 |
|---|---|---|---|---|---|---|---|---|
| 1 | Water | 25,5 | 25,4 | 25,4 | 25,3 | 25,5 | 25,3 | 24,9 |
| 2 | NH₃ (25 %ig in Wasser) | 0,1 | | | | | | |
| | DEA | | 0,2 | | | | | |
| | TEA | | | 0,2 | | | | |
| | Genamin® CH-020 | | | | 0,3 | | | |
| | AMP-95 | | | | | 0,1 | | |
| | NMG | | | | | | 0,3 | |
| | DMG (50 %-ig in Wasser) | | | | | | | 0,6 |
| 3 | Calgon® N (Dispergiermittel) | 0,1 | 0,1 | 0,1 | 0,1 | 0,1 | 0,1 | 0,1 |
| 4 | Tylose® MH 10000 (Verdicker) | 0,5 | 0,5 | 0,5 | 0,5 | 0,5 | 0,5 | 0,5 |
| 5 | Genapol® ED 3060 (Dispergiermittel) | 0,2 | 0,2 | 0,2 | 0,2 | 0,2 | 0,2 | 0,2 |
| 6 | Texanol® (Koaleszenzmittel) | 1,9 | 1,9 | 1,9 | 1,9 | 1,9 | 1,9 | 1,9 |
| 7 | Byk® 038 (Entschäumer) | 0,1 | 0,1 | 0,1 | 0,1 | 0,1 | 0,1 | 0,1 |
| 8 | Mowiplus® XW 330 (Netzmittel) | 0,5 | 0,5 | 0,5 | 0,5 | 0,5 | 0,5 | 0,5 |
| 9 | Nipacide® BMS (Biozid) | 0,2 | 0,2 | 0,2 | 0,2 | 0,2 | 0,2 | 0,2 |
| 12 | Omyacarb® 2 GU (Füllstoff) | 15,0 | 15,0 | 15,0 | 15,0 | 15,0 | 15,0 | 15,0 |
| 14 | Kronos® 2160 (Pigment) | 12,0 | 12,0 | 12,0 | 12,0 | 12,0 | 12,0 | 12,0 |
| 15 | Water | 5,4 | 5,4 | 5,4 | 5,4 | 5,4 | 5,4 | 5,4 |
| 16 | Mowilith® LDM 7714 (Binder) | 38,2 | 38,2 | 38,2 | 38,2 | 38,2 | 38,2 | 38,2 |
| 17 | Tafigel® PU 40 (1:9 in Water) (Rheolgie Modifizierer) | 0,3 | 0,3 | 0,3 | 0,3 | 0,3 | 0,3 | 0,3 |
| | Summe | 100 | 100 | 100 | 100 | 100 | 100 | 100 |
| | PVK | 32,8 | 32,8 | 32,8 | 32,8 | 32,8 | 32,8 | 32,8 |
| | Feststoffgehalt | 46,1 | 46,1 | 46,1 | 46,1 | 46,1 | 46,1 | 46,1 |

Die Komponenten 1 - 14 wurden durch sukzessive Zugabe unter hoher Scherrate dispergiert. Anschließend wurden die Komponenten 15 - 18 unter geringer Scherrate untergerührt.

Zur Beurteilung der Farben wurden der pH-Wert, die Viskosität, Gefriertaustabilität und der Nassabrieb beurteilt. Um die Lagerbeständigkeit zu simulieren wurde die Farbe eine Woche bei 60 °C gelagert, sowie die Synä resebildung, der pH-Wert und die Viskosität beurteilt. Die Parameter wurden dazu wie folgt bestimmt.

Der pH-Wert wurde mittels einer pH-Elektrode von der Firma Knick (SE 100N) in Anschluss an die Formulierung der Farbe und nach 1 Woche bei 60 °C bestimmt.

Die Viskosität wurde auf einem Haake Viscotester 550 von ThermoScientific bestimmt.

Die Nassabriebbeständigkeit wurde entsprechend der Normen DIN EN ISO 11998 und DIN EN 13300 auf einem Farbfilm von 200 µm nach Trocknung von 1 Woche bei Raumtemperatur bestimmt.

Zur Bestimmung der Gefriertaustabilität wurde eine Probe der Farbe bei -18 °C eingefroren und anschließend wieder aufgetaut. Dies wurde so lange wiederholt, wie keine dauerhaften Schäden zu erkennen waren. Beurteilt wurde die Anzahl der gefriertaustabilen Zyklen.

Zur Bestimmung der Synärese wurden in ein Gefäß mit Füllstandsskalierung die gleiche Menge Farbe gefüllt. Anschließend wurde die abgeschiedene Wassermenge nach Lagerung von 1 Woche bei 60 °C abg elesen und als Prozentsatz der Farbmenge dokumentiert.

**Tabelle 3: Ergebnisse der anwendungstechnischen Untersuchungen der Beispiele 1 bis 7**

| Beispiel | pH | | Viskosität 1/2s [mPas] | | Viskosität 1/60s [mPas] | | Viskosität 1/200s [mPas] | | Nassabrieb | | Gefriertau stabile Zyklen | Synärese [%] |
|---|---|---|---|---|---|---|---|---|---|---|---|---|
| | Initial | 1 Woche bei 60 °C | Initial | 1 Woche bei 60 °C | Initial | 1 Woche bei 60 °C | Initial | 1 Woche bei 60 °C | Mittlerer Schicht-dickeverlust [µm] | Abrieb-klasse | | |
| 1 | 9,4 | 9,1 | 5591 | 6301 | 3017 | 3701 | 1565 | 1774 | 77,2 | 3 | 0 | 5,0 |
| 2 | 9,2 | 8,9 | 5058 | 6505 | 3122 | 2822 | 1617 | 1426 | 65,0 | 3 | 0 | 4,0 |
| 3 | 9,0 | 8,7 | 7128 | 6682 | 3602 | 3339 | 1984 | 1833 | 64,4 | 3 | 0 | 5,0 |
| 4 | 9,3 | 9,1 | 7240 | 10782 | 3122 | 5012 | 1705 | 2676 | 74,7 | 3 | 0 | 6,0 |
| 5 | 9,6 | 9,1 | 7266 | 5606 | 2910 | 3036 | 1516 | 1508 | 80,3 | 3 | 0 | 4,5 |
| 6 | 9,5 | 9,1 | 7615 | 6177 | 2860 | 3008 | 1515 | 1492 | 87,8 | 3 | 0 | 2,5 |
| 7 | 9,3 | 8,9 | 6951 | 5401 | 2872 | 2897 | 1529 | 1473 | 99,5 | 3 | 0 | 1,5 |

**Tabelle 4: Ergebnisse der anwendungstechnischen Untersuchungen der Beispiele 8 bis 14**

| Beispiel | pH | | Viskosität 1/2s [mPas] | | Viskosität 1/60s [mPas] | | Viskosität 1/200s [mPas] | | Nassabrieb | | Gefriertau stabile Zyklen | Synärese [%] |
|---|---|---|---|---|---|---|---|---|---|---|---|---|
| | Initial | 1 Woche bei 60 °C | Initial | 1 Woche bei 60 °C | Initial | 1 Woche bei 60 °C | Initial | 1 Woche bei 60 °C | Mittlerer Schicht-dickeverlust [µm] | Abrieb-klasse | | |
| 8 | 8,2 | 8,1 | 10140 | 5606 | 1244 | 973 | 593 | 466 | 11,6 | 2 | 2 | 35 |
| 9 | 8,7 | 8,5 | 11316 | 9825 | 1294 | 893 | 404 | 612 | 10,6 | 2 | 2 | 35 |
| 10 | 8,4 | 8,4 | 10569 | 10654 | 1281 | 1108 | 603 | 494 | 9,0 | 2 | 2 | 35 |
| 11 | 8,5 | 8,4 | 11865 | 8275 | 1287 | 892 | 611 | 434 | 11,5 | 2 | 2 | 30 |
| 12 | 8,7 | 8,5 | 9535 | 6487 | 1202 | 844 | 572 | 416 | 13,4 | 2 | 2 | 30 |
| 13 | 8,7 | 8,5 | 13010 | 8031 | 1399 | 757 | 661 | 360 | 13,9 | 2 | 2 | 20 |
| 14 | 8,6 | 8,4 | 12760 | 6145 | 1397 | 690 | 667 | 337 | 12,2 | 2 | 2 | 18 |

Es konnte gezeigt werden, dass durch die Zugabe der Amine in allen Fällen die Farbe einen pH-Wert von 8 bis 10 ergab. Darüber hinaus zeigen die Ergebnisse in Tabelle 3 und 4, dass die Farben ein vergleichbares Eigenschaftsprofil bzgl. Viskosität, Nassabrieb und Gefriertaustabilität aufweisen. In Bezug auf die Synärese-Bildung konnte beobachtet werden, dass NMG und DMG die Synärese im Vergleich zu den Vergleichsaminen signifikant reduziert.

Der VOC-Gehalt der Amine wurde entsprechend DIN EN ISO 17895 für 0,1 % bis 15 % VOC-Gehalt bzw. entsprechend DIN EN ISO 11890-2 für 0,01 % bis 0,1 % VOC-Gehalt bestimmt. Der Geruch wurde olfaktorisch an den Proben bestimmt. VOC-Gehalt und Geruch der Vergleichsamine Ammoniak, Monoethanolamin (MEA), DEA, TEA, AMP-95 und Genamin® CH-020, sowie der erfindungsmäßigen Amine NMG und DMG sind in Tabelle 5 zusammen gefasst.

**Tabelle 5: Geruch und VOC-Gehalt der beschriebenen Amine**

| Amine | VOC [%] | Methode | Geruch |
|---|---|---|---|
| NH₃ | - | - | Beißend |
| MEA | >15 | DIN 11890-2 | Fischig-beißend |
| DEA | >15 | DIN 11890-2 | Leicht fischig |
| TEA | <0,01 | DIN 17895 | Fischig |
| Genamin® CH-020 | 3,1 | DIN 11890-2 | Fischig |
| AMP-95 | >15 | DIN 11890-2 | Fischig-beißend |
| NMG | <0,01 | DIN 17895 | Geruchsfrei |
| DMG | <0,01 | DIN 17895 | Geruchsfrei |

## Patentansprüche

1. Dispersion enthaltend
(A) mindestens eine Verbindung der Formel (I) 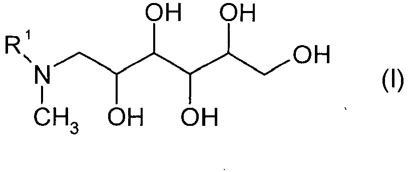 worin R¹ H, C₁-C₄-Alkyl, CH₂CH₂OH oder CH₂CH(CH₃)OH bedeutet,
(B) einen polymeren Binder, welcher ein Homo- oder Copolymer olefinisch ungesättigter Monomere ist,
und
(C) Wasser.

2. Dispersion nach Anspruch 1, die darüber hinaus einen oder mehrere der Bestandteile ausgewählt aus der Gruppe bestehend aus Pigment, Dispergiermittel, Entschäumer, Koaleszenzsmittel, Rheologie-Additiv, Biozid, Netzmittel enthält.

3. Dispersion nach Anspruch 1 und/oder 2, wobei R¹ H, Methyl oder CH₂CH₂OH ist.

4. Dispersion nach Anspruch 1 und/oder 2, wobei R¹ H oder Methyl ist.

5. Dispersion nach einem oder mehreren der Ansprüche 1 bis 4, bei der die Konzentration der Verbindung der Formel (I) 0,01 bis 10 Gew.-% beträgt.

6. Dispersion nach einem oder mehreren der Ansprüche 1 bis 4, bei der die Konzentration der Verbindung der Formel (I) 0,01 bis 5 % beträgt.

7. Dispersion nach einem oder mehreren der Ansprüche 1 bis 4, bei der die Konzentration der Verbindung der Formel (I) 0,01 bis 1 % beträgt.

8. Dispersion nach einem oder mehreren der Ansprüche 1 bis 7, enthaltend ein Weiß- oder Buntpigment in einer Menge von 10 bis 80 Gew.-%

9. Dispersion nach einem oder mehreren der Ansprüche 1 bis 8, enthaltend Netz- oder Dispergiermittel in einer Menge von 0,01 bis 10 Gew.-%

10. Dispersion nach einem oder mehreren der Ansprüche 1 bis 9, enthaltend Entschäumer in einer Menge von 0,01 bis 5 Gew.-%

11. Dispersion nach einem oder mehreren der Ansprüche 1 bis 10, enthaltend Biozide in einer Menge von 0,01 bis 5 Gew.-%

12. Dispersion nach einem oder mehreren der Ansprüche 1 bis 11, enthaltend Koaleszenzmittel in einer Menge von 0 bis 5 Gew.-%.

13. Dispersion nach einem oder mehreren der Ansprüche 1 bis 12, enthaltend Rheologie-Additive einer Menge von 0,1 bis 10 Gew.-%

14. Dispersion nach einem oder mehreren der Ansprüche 1 bis 13, worin 1 bis 80 Gew.-% des Bestandteils B) enthalten sind.

15. Dispersion nach einem oder mehreren der Ansprüche 1 bis 14, worin 1 bis 80 Gew.-% Wasser enthalten sind.

16. Dispersion nach einem oder mehreren der Ansprüche 1 bis 15, worin die Verbindung der Formel (I) von Glucose abgeleitet ist.

17. Verwendung einer Verbindung der Formel (I) 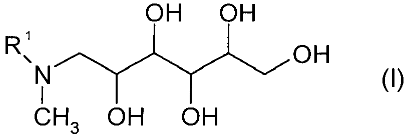 worin R¹ H, C₁-C₄-Alkyl, CH₂CH₂OH oder CH₂CH(CH₃)OH bedeuten, als oberflächenaktiver Bestandteil in Dispersionen, die mindestens einen polymeren Binder, welcher ein Homo- oder Copolymer olefinisch ungesättigter Monomere ist, und Wasser enthalten.

18. Verfahren zur Reduzierung der Trennung zwischen der wässrigen Phase und der festen Phase von Dispersionen, indem man die Verbindung der Formel (I) und gegebenenfalls Koaleszenzmittel, Entschäumer, Biozide, Rheologie-Additive sowie Netz- und/oder Dispergiermitteln in Wasser löst, und anschließend einen polymeren Binder, welcher ein Homo- oder Copolymer olefinisch ungesättigter Monomere ist, unter geringer Scherrate einrührt.

19. Verfahren nach Anspruch 18, das bei Temperaturen von 0 bis 100 °C erfolgt.

20. Verfahren nach Anspruch 18 und/oder 19, worin zur Lösung von Verbindung der Formel (I) und gegebenenfalls Koaleszenzmittel, Entschäumer, Biozide, Rheologie-Additive sowie Netz- und/oder Dispergiermitteln mindestens ein Pigment zugegeben wird, und diese Zusammensetzung unter hoher Scherung dispergiert wird.

## Claims

1. A dispersion comprising
(A) at least one compound of the formula (I) 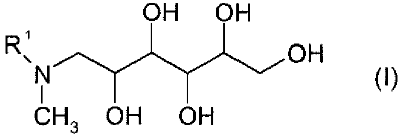 in which R¹ is H, C₁-C₄ alkyl, CH₂CH₂OH or CH₂CH(CH₃)OH,
(B) a polyameric binder which is a homo- or copolymer of olefinically unsaturated monomers,
and
(C) water.

2. The dispersion as claimed in claim 1, further comprising one or more of the constituents selected from the group consisting of pigment, dispersant, defoamer, coalescent, rheological additive, biocide, wetting agent.

3. The dispersion as claimed in claim 1 and/or 2, where R¹ is H, methyl or CH₂CH₂OH.

4. The dispersion as claimed in claim 1 and/or 2, where R¹ is H or methyl.

5. The dispersion as claimed in one or more of claims 1 to 4, in which the concentration of the compound of the formula (I) is 0.01 wt% to 10 wt%.

6. The dispersion as claimed in one or more of claims 1 to 4, in which the concentration of the compound of the formula (I) is 0.01 wt% to 5 wt%.

7. The dispersion as claimed in one or more of claims 1 to 4, in which the concentration of the compound of the formula (I) is 0.01 wt% to 1 wt%.

8. The dispersion as claimed in one or more of claims 1 to 7, comprising a white or chromatic pigment in an amount of 10 to 80 wt%.

9. The dispersion as claimed in one or more of claims 1 to 8, comprising wetting agents or dispersants in an amount of 0.01 to 10 wt%.

10. The dispersion as claimed in one or more of claims 1 to 9, comprising defoamers in an amount of 0.01 to 5 wt%.

11. The dispersion as claimed in one or more of claims 1 to 10, comprising biocides in an amount of 0.01 to 5 wt%.

12. The dispersion as claimed in one or more of claims 1 to 11, comprising coalescents in an amount of 0 to 5 wt%.

13. The dispersion as claimed in one or more of claims 1 to 12, comprising rheological additives in an amount of 0.1 to 10 wt%.

14. The dispersion as claimed in one or more of claims 1 to 13, comprising 1 to 80 wt% of constituent B).

15. The dispersion as claimed in one or more of claims 1 to 14, comprising 1 to 80 wt% of water.

16. The dispersion as claimed in one or more of claims 1 to 15, the compound of the formula (I) deriving from glucose.

17. The use of a compound of the formula (I) 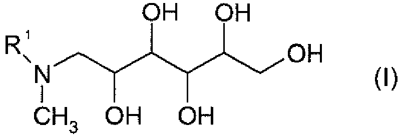 in which R¹ is H, C₁-C₄ alkyl, CH₂CH₂OH or CH₂CH(CH₃)OH as surface-active constituent in dispersions which comprise at least one polymeric binder, which is a homo- or copolymer of olefinically unsaturated monomers, and water.

18. A method for reducing the separation between the aqueous phase and the solid phase of dispersions, by dissolving the compound of the formula (I) and optionally coalescents, defoamers, biocides, rheological additives, and also wetting agents and/or dispersants in water, and subsequently incorporating a polymeric binder, which is a homo- or copolymer of olefinically unsaturated monomers with stirring at a low shear rate.

19. The method as claimed in claim 18, which takes place at temperatures of 0 to 100°C.

20. The method as claimed in claim 18 and/or 19, in which the solution of compound of the formula (I) and optionally coalescents, defoamers, biocides, rheological additives, and also wetting agents and/or dispersants is admixed with at least one pigment, and this composition is dispersed with high shearing.

## Revendications

1. Dispersion contenant
(A) au moins un composé de formule (I) 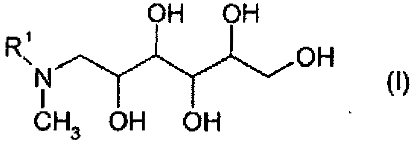 dans laquelle
R¹ signifie H, C₁-C₄-alkyle, CH₂CH₂OH ou CH₂CH(CH₃)OH,
(B) un liant polymère, qui est un homopolymère ou un copolymère de monomères oléfiniquement insaturées et
(C) de l'eau.

2. Dispersion selon la revendication 1, qui contient en outre un ou plusieurs des constituants choisis dans le groupe constitué par un pigment, un dispersant, un antimousse, un agent de coalescence, un additif de rhéologie, un biocide, un mouillant.

3. Dispersion selon la revendication 1 et/ou 2, R¹ représentant H, méthyle ou CH₂CH₂OH.

4. Dispersion selon la revendication 1 et/ou 2, R¹ représentant H ou méthyle.

5. Dispersion selon l'une ou plusieurs des revendications 1 à 4, dans laquelle la concentration en composé de formule (I) est de 0,01 à 10% en poids.

6. Dispersion selon l'une ou plusieurs des revendications 1 à 4, dans laquelle la concentration en composé de formule (I) est de 0,01 à 5%.

7. Dispersion selon l'une ou plusieurs des revendications 1 à 4, dans laquelle la concentration en composé de formule (I) est de 0,01 à 1%.

8. Dispersion selon l'une ou plusieurs des revendications 1 à 7, contenant un pigment blanc ou coloré en une quantité de 10 à 80% en poids.

9. Dispersion selon l'une ou plusieurs des revendications 1 à 8, contenant un agent mouillant ou un dispersant en une quantité de 0,01 à 10% en poids.

10. Dispersion selon l'une ou plusieurs des revendications 1 à 9, contenant un antimousse en une quantité de 0,01 à 5% en poids.

11. Dispersion selon l'une ou plusieurs des revendications 1 à 10, contenant un biocide en une quantité de 0,01 à 5% en poids.

12. Dispersion selon l'une ou plusieurs des revendications 1 à 11, contenant un agent de coalescence en une quantité de 0 à 5% en poids.

13. Dispersion selon l'une ou plusieurs des revendications 1 à 12, contenant un additif de rhéologie en une quantité de 0,1 à 10% en poids.

14. Dispersion selon l'une ou plusieurs des revendications 1 à 13, contenant 1 à 80% en poids du constituant B).

15. Dispersion selon l'une ou plusieurs des revendications 1 à 14, contenant 1 à 80% en poids d'eau.

16. Dispersion selon l'une ou plusieurs des revendications 1 à 15, dans laquelle le composé de formule (I) est dérivé du glucose.

17. Utilisation d'un composé de formule (I) 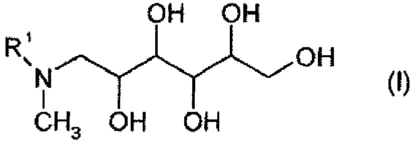 dans laquelle R¹ signifie H, C₁-C₄-alkyle, CH₂CH₂OH ou CH₂CH(CH₃)OH, comme constituant tensioactif dans des dispersions, qui contiennent au moins un liant polymère, qui est un homopolymère ou une copolymère de monomères oléfiniquement insaturés, et de l'eau.

18. Procédé pour la réduction de la séparation entre la phase aqueuse et la phase solide de dispersions, en ce qu'on dissout le composé de formule (I) et le cas échéant des agents de coalescence, des antimousses, des biocides, des additifs de rhéologie ainsi que des agents mouillants et/ou des dispersants, dans de l'eau et on délaye ensuite, sous une faible vitesse de cisaillement, un liant polymère, qui est un homopolymère ou un copolymère de monomères oléfiniquement insaturés.

19. Procédé selon la revendication 18, qui a lieu à des températures de 0°C à 100°C.

20. Procédé selon la revendication 18 et/ou 19, dans lequel on ajoute au moins un pigment à la solution du composé de formule (I) et le cas échéant des agents de coalescence, des antimousses, des biocides, des additifs de rhéologie ainsi que des agents mouillants et/ou des dispersants et cette composition est dispersée sous un cisaillement élevé.
